# EUROPEAN PATENT SPECIFICATION

(11) **EP 1 989 057 B1**
(45) Date of publication and mention of the grant of the patent: **11.04.2012**
(21) Application number: 07703564.0
(22) Date of filing: 27.02.2007
(51) Int. Cl.: B41M 5/26, C08K 3/00

(54) **DARK COLORED, LASER-MARKABLE POLYMER COMPOSITION**
DUNKELFARBIGE, LASERMARKIERBARE POLYMERZUSAMMENSETZUNG
COMPOSITION DE POLYMERE MARQUABLE AU LASER, DE COULEUR FONCEE

(30) Priority: 28.02.2006 EP 06075456
(43) Date of publication of application: 12.11.2008
(73) Proprietor: Mitsubishi Chemical Europe GmbH, 40549 Düsseldorf (DE)
(72) Inventor: BOS, Martinus, Louis, Maria, NL-6121 HS Born (NL); HIGLER, Johannes, Fredericus, NL-6181 GW Elsloo (NL); PLESSERS, Mathieu, Marie, Jozef, B-3670 Meeuwen-Gruitrode (BE); DUIJNHOVEN VAN, Franciscus, Gerardus, Henricus, NL-5731 NX Mierlo (NL)
(74) Representative: HOFFMANN EITLE
(86) International application number: PCT/EP2007/001668
(87) International publication number: WO 2007/098919

(56) References cited:
- EP-A- 0 867 466
- DE-A1- 4 446 874
- US-A- 5 576 377
- US-B1- 6 627 299

## Description

The invention relates to polymer compositions comprising a thermoplastic polymer and at least one colorant. The invention also relates to articles wholly or partly made of the polymer composition and to a process for applying a light laser mark onto a dark background of such article.

US-A-5,576,377 describes that coloured markings can be obtained on a dark background by the absorption of laser energy by using a combination of organic colorants with inorganic pigments of the same colour or with titanium dioxide and carbon black.

A drawback of the known polymer composition is that acceptable contrast values can only be obtained at a very limited range of laser parameters, i.e. small variations in frequency, power, marking speed and/or focal distance may result in a strong decrease in contrast compared to the optimum contrast obtained using optimum laser settings. In other words, the processing window for laser marking is very small.

The object of the present invention is to provide a dark coloured polymer composition that can be marked by laser light with a light marking with a good contrast with the dark background over a larger range of laser parameters.

This aim is achieved in that the polymer composition further comprises from 0.1 % by weight to 15% by weight, relative to the total weight of the composition, of a laser marking additive being or comprising a polymer of an acrylate monomer, or wherein the polymer composition further comprises from 0.1% by weight to 15% by weight, relative to the total weight of the composition, of a mixture comprising at least said laser marking additive and a metal sulfate, whereby the metal is Na, K, Mg, Ca, Ba, Zr, Zn, Al and/or Si.

It has surprisingly been found that the use of a polymer of an acrylate monomer and optionally of a metal sulfate, whereby the metal is Na, K, Mg, Ca, Ba, Zr, Zn, Al and/or Si, as a laser marking additive for applying a light laser marking onto an article having, at least at the place where the marking is applied, a dark background results in that light laser marks can be provided on the dark background over a larger processing window regarding laser parameters. An advantage of the present invention is that the choice of the colorant(s) is not or at least less critical for obtaining a light laser mark onto a dark background. Thus, an advantage of the present invention is that a dark colored polymer composition can be, independent from the colorant composition, marked by laser radiation with a light marking with good contrast with the dark background. In view of this, a wide variety of colorant(s) can be used in the polymeric composition of the invention without impairing the light laser markability on the dark background.

As used herein, all weight percentages given are relative to the total weight of the polymer composition.

The present invention relates to dark colored, laser markable polymer compositions. More in particular, the present invention relates to polymer compositions with a color having a lightness L⁻ value lower than 50. Polymer compositions with a color having a lightness L⁻ value lower than 50 can be obtained by using, in appropriate amounts, for example (i) inorganic and/or organic pigments such as for example carbon black and/or iron oxide, (ii) dark colored dyes, (iii) combination of light colored dyes or pigments. Carbon black is frequently used as colorant for obtaining a polymer composition having a lightness value L* lower than 50. The present invention therefore also relates to polymer compositions comprising a thermoplastic polymer, carbon black as colorant and from 0.1% by weight to 15% by weight of a laser marking additive being or comprising a polymer of an acrylate monomer, or wherein the polymer composition further comprises from 0.1 % by weight to 15% by weight of a mixture comprising at least said laser marking additive and a metal sulfate, whereby the metal is Na, K, Ca, Ba, Mg, Zn, Al, Zr or Si. More in particular, the present invention relates to a polymer composition comprising a thermoplastic polymer, from 0.01 to 5% by weight carbon black as colorant and from 0.1 to 15% by weight of laser marking additive(s) as defined above. More in particular, the present invention relates to a polymer compositions comprising polycarbonate, from 0.01 to 5% by weight carbon black as colorant and from 0.1 to 15% by weight of laser marking additive(s) as defined above. More in particular, the present invention relates to a polymer compositions comprising polycarbonate, from 0.01 to 0.5% by weight carbon black as colorant and from 1 to 3% by weight of laser marking additive(s) as defined above.

As used herein, the L* value of a color is a measure for the lightness of a color according to the Commission Internationale de l'Eclairage L*a*b* color space (CIE 1976; hereinafter "CIELab"). The L*a*b* colorimetric system was standardized in 1976 by Commission Internationale de l'Eclairage (CIE). The CIELab L* value, utilized herein to define the darkness/lightness of the polymer composition according to the present invention, is a unit of color measurement in the afore-mentioned CIELab system. A color may be matched according to the Commission Internationale de l'Eclairage L*a*b* color space (hereinafter "CIELab"). CIELab is a mathematical tristimulus color scale based on the CIE 1976 standard. In the L*a*b* colorimetric system, L* refers to lightness expressed by a numerical value of from 0 to 100, in which L*=0 means that the color is complete black, and L*=100 means that the color is complete white.

The lightness L* value of the color of the polymer composition according to the invention is measured as follows: A granule sample of the polymer composition is injection moulded to obtain plaques having a thickness of ≥ 2 mm. These plaques are measured using a Minolta 3700d as spectrophotometer with diffuse/8° geometry. A CIE Standard illuminant D65 is used as light source and 10° is used as standard Observer. Colour space is CIE Lab 76. Instrument settings are specular included, reflectance measuring on a measuring area of 380-720 nm. The L*value in the CIELab model represent the luminance of the color.

The contrast between the dark background and the light laser marking can be expressed as ΔL*, ΔL* is the difference in L* values between the two colors and is calculated by: ΔL* =L*₂-L*₁.

The polymer composition according to the invention comprises from 0.1 to 15% by weight of a laser marking additive being or comprising a polymer of an acrylate monomer. Alternatively, the polymer composition comprises from 0.1 to 15% by weight of a mixture comprising at least said laser marking additive and said metal sulfate. Examples of acrylate monomers are methyl methacrylate, ethyl acrylate, butyl acrylate and trimethylol propane triacrylate. Examples of polymers of an acrylate monomer are polymers of methyl methacrylate, ethyl acrylate, butyl acrylate and/or trimethylol propane triacrylate. Non-limiting examples of polymers of an acrylate monomer are polymethyl methacrylate, methyl methacrylate-butadiene-styrene polymer, ethylene ethyl acrylate copolymer and ethylene butyl acrylate copolymer. An example of a laser marking additive comprising a polymer of an acrylate monomer is a compound having a poly(methyl methacrylate) shell on a poly(butyl acrylate) rubbery core. An example of a suitable metal sulfate is barium sulphate.

In a preferred embodiment of the invention, the polymer composition comprises barium sulphate as laser marking additive. It has been found that adding barium sulfate as laser marking additive to a polymer composition comprising thermoplastic polymer and colorant(s) results in that the color of the polymer composition only changes to a small degree or does not change at all. In another preferred embodiment of the invention, the polymer composition comprises polymethyl methacrylate as laser marking additive or the polymer composition comprises a laser marking additive comprising polymethyl methacrylate.

The amount of laser marking additive in the polymer composition according to the invention is preferably at least 0.5 wt.%, more preferably at least 1 wt.% and even more preferably at least 2 wt.%. The advantage of this is an increasing improvement of the contrast. At higher contents up to for example 15wt.% the contrast may further marginally improve. Preferably, however, the amount of laser marking additive is lower than 10 wt.%, more preferably lower than 8 wt.%, and most preferably lower than 5 or even lower than 3 wt.% as this results in that other properties, like mechanical properties are less affected, while the contrast obtained upon laser marking is not substantially less. Preferably, the polymer composition therefore contains from 0.1 to 5 wt.%, more preferably from 0.5 to 3 wt.% and most preferably from 1 to 3 wt.% laser marking additive.

In view of obtaining good contrast, the average particle size of the laser marking additive(s) is preferably at least 250 nanometer and more preferably at least 500 nanometer. With average particle size is meant the average particle diameter. This can be determined for example with a dynamic light scattering particle analyzer or sieve analysis.

Colorants are usually classified into the following three categories: inorganic pigments, organic pigments and dyes (or solvent dyes). The characterizing difference between pigments and dyes is the difference in solubility. Pigments are virtually insoluble in the medium in which they are used, also under processing conditions. They consist of solid crystalline particles that must be dispersed in the polymer in a physical/mechanical way. The colour of a pigment is not only dependent on molecular structure, but also on crystal structure and morphology. The colour of a polymer/pigment composition is therefore dependent on the quality of the dispersion.

Dyes on the other hand are compounds that are soluble under the processing conditions and/or conditions of use. They commonly show an intrinsic affinity with a polymer substrate, and can for example adsorb to a substrate from a solution. Dyes can mix with polymers on a molecular scale, and as a result they can give clear and transparent colours, with high colour intensity. In certain cases dyes are therefore preferred to pigments.

The polymer composition according to the present invention comprises at least one colorant. The colorant(s) and the amount(s) are in particular chosen such that the polymer composition has a lightness L* value lower than 50. Usually, carbon black is used as colorant. Other colorants may also be present, for example titanium dioxide may be present as inorganic additive. In a preferred embodiment of the invention, the polymer composition comprises carbon black and optionally other colorants.

The amount of colorants in the polymer composition according to the invention is preferably from 0.01 to 20% by weight (relative to the total weight of the polymer composition). The amount of carbon black in the polymer composition is preferably from 0.01 to 5 wt.%, more preferably from 0.01 to 1 wt.%, more preferably from 0.01 to 0.5 wt.%, more preferably from 0.01 to 0.2 wt.% and even more preferably from 0.01 to 0.15 wt.%.

The thermoplastic polymer in the polymer composition may be any thermoplastic polymer or mixture of thermoplastic polymers. Preferred thermoplastic polymers are for example polyamide, polystyrene, styrene acrylonitrile copolymer, polyester, polycarbonate and ABS. These polymers are highly suitable for laser marking and are widely used in applications in which laser markability is desired, such as in electronic components.

More preferably the thermoplastic polymer is a laser energy absorbing polymer or a mixture of laser-energy absorbing polymers. Examples of laser-energy absorbing polymers are polystyrene, polycarbonate, styrene acrylonitrile polymer, polyethylene terephtalate, polybutylene terephtalate and ABS. It has surprisingly been found that, by adding from 0.1 to 15% by weight, relative to the total weight of the polymer composition, of a laser marking additive being or comprising a polymer of an acrylate monomer, or by adding from 0.1 to 15% by weight, relative to the total weight of the polymer composition, of a mixture comprising at least said laser marking additive and a metal sulfate, whereby the metal is Na, K, Mg, Ca, Ba, Zr, Zn, Al or Si, to a dark colored polymer composition comprising a laser energy absorbing polymer, light marking can be provided on the dark background. This was unexpected since the laser-energy absorbing polymer is at least partially carbonized during laser inscription due to the absorption of laser energy and the laser marking additive that absorbs laser light was expected to induce even more carbonization in the polymer during laser inscription, thereby producing a darker coloration of the already dark background.

The polymer composition according to the invention may further comprises up to 50% by weight of reinforcing materials, up to 60% by weight of elastomeric modifier, up to 20% by weight of flame-retardants, and/or up to 2% by weight of processing additives.

A preferred embodiment of the invention is a polymer composition comprising from 30 to 99.89% by weight polycarbonate; from 0 to 60% by weight of elastomeric modifier, for example ABS; from 0.01 to 5% by weight carbon black and from 0.1 to 15% by weight of the laser marking additive(s). In a more preferred embodiment of the invention, the polymer composition comprising from 30 to 99.89% by weight polycarbonate; from 0 to 60% by weight of elastomeric modifier, for example ABS; from 0.01 to 5% by weight carbon black and from 0.1 to 15% by weight of barium sulphate or polymethyl methacrylate.

The polymer composition according to the invention can be prepared in any customary manner, for instance by separately adding the laser marking additive and mixing them with the polymer and colorants during extrusion of the polymer. Another process comprises the preparation of a so-called masterbatch composition in which the laser marking additive have been mixed in the desired ratios, optionally in a polymer matrix, following which the masterbatch is added and mixed with the polymer and the colorants of the polymer composition.

The invention also relates to articles made wholly of partly of the polymer composition according to the invention. All known techniques for the preparation of the articles from the polymer composition can be used, like for example injection molding, blow molding, casting, extrusion etc. In another embodiment the article may comprise a substrate having a coating thereon of the polymer composition according to the invention. Such article may be formed by applying a pre-polymer composition on the substrate and then in-situ polymerizing to form the polymer composition.

The invention also relates to a process for applying a light marking to a dark background by radiating an article consisting, at least at the place where the marking is applied, of a polymer composition according to the invention by means of laser light in the pattern of the marking, preferably with laser light with a wavelength of 532 nm or with a wavelength of 1064 nm. Preferably this is done by means of an Nd:YAG laser. The advantage of this laser is that it is stable and has a writing head. In a specially preferred embodiment of the process a diode-pumped laser is used. This has the advantage that this laser is much less expensive and more available and, in spite of a lower pulse length and beam diameter, still produces markings sufficiently rich in contrast when applied to the polymer composition according to the invention.

The invention is elucidated with the following non-limiting examples and comparative experiments.

### Examples 1 - 8 and comparative experiment A

In the following examples, all parts and percentages are by weight unless indicated otherwise. The L*-value represents the darkness of the color, i.e. L*=0 is black and L*=100 is white. In general, a dark color is obtained at L*-values below 50.

### Comparative experiment A

A titan-grey colored (color nr. 24105) polycarbonate (PC) compound was extruded on a co-rotating twin screw extruder at a temperature of 290°C and the extrudate was granulated. The compound composition, including color formulation and the composition of the additives, are given below.

### Additives:

9% glass fiber (OC 108F-14P from Owens Corning)
0.05% phosphite stabilizer (Lankromark LE131 from Akcros)
0.40% lubricant (PETS, Loxiol EP861 from Cognis)
0.10% flame retardant salt (potassium perfluorbutane-sulphonate, RM65 from Miteni)
0.05% PTFE anti-drip (Teflon 30N from DuPont)

### Color formulation (for obtaining color nr. 24105), L=45:

1.133% TiO2 white, pigment white 6 (Kronos 2233 from Kronos)
0.0043% Solvent red 52 (Kenawax Red Rubine 2RP)
0.0377% Pigment black 7 (Black Pearls 800 from Cabot)
0.0374% Solvent blue 97 (Macrolex Blue RR from Bayer)

### Compound composition

| Constituent | reference |
|---|---|
| PC | 89.1876% |
| Additives | 9.6000% |
| Color | 1.2124% |
| Diamelia 40/10 (natural barium sulphate) from Micronor | - |
| Velvolux K3 (synthetic barium sulphate) from Sachtleben Chemie | - |
| PC9197=Masterbatch containing 70% polycarbonate and 30% Techpolymer MBX-8 (methyl methacrylate/ ethyleneglycol dimethacrylate copolymer) from Sekisui Plastics | - |
| Paraloid EXL3361 (poly(butyl acrylate)/ poly(methyl methacrylate) polymer (core-shell rubber)) from Rohm&Haas | - |
| Total [%] | 100 |

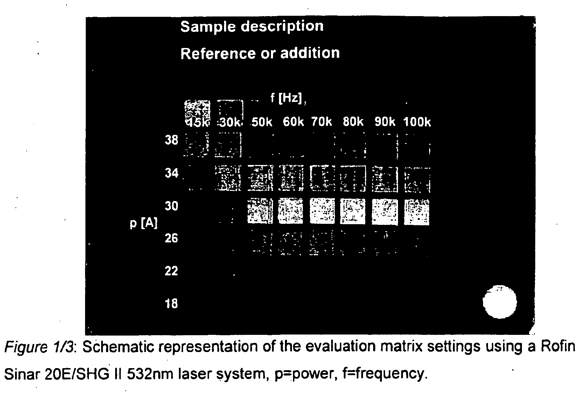

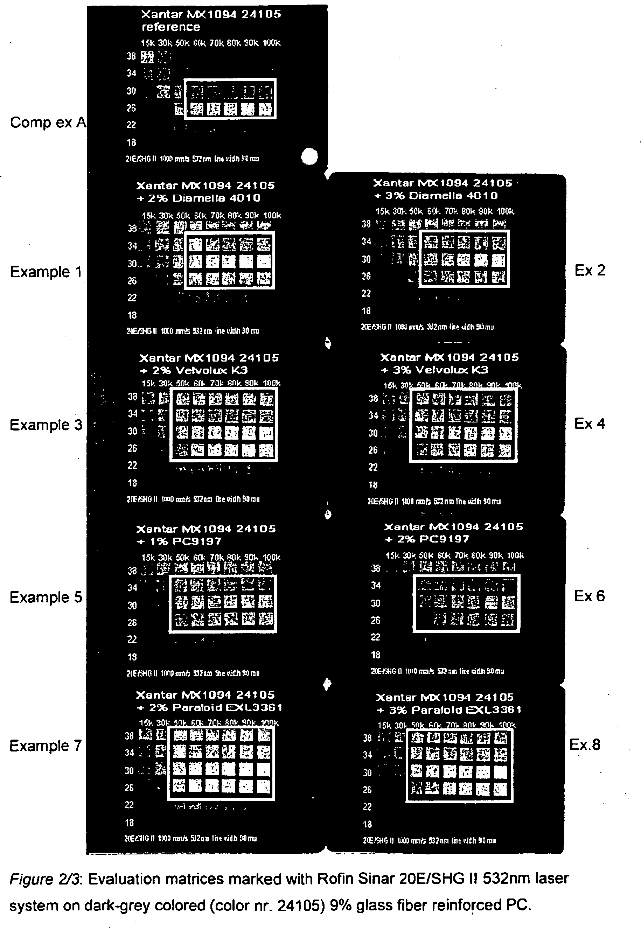

The granulate was injection molded into samples plaques with dimensions 70x50x2mm at 290°C. On these samples, laser marking evaluations were performed with a Rofin Sinar 20E/SHG II 532nm laser system. A so-called evaluation matrix was marked. In such a matrix, the power (p [A] = 18 - 38) and frequency (f [kHz] =15-100) are varied at given marking speed (1000 mm/s), line width (90µm) and focal distance (in focus). The evaluation matrix gives an indication of the processing window for marking, i.e. it is shown over which range of laser parameters the desired contrast is obtained. The desired contrast is defined as L*>51. The evaluation matrix setting is schematically given in Figure 1. A scan of the marked sample is shown in Figure 2. It is indicated that the processing window for marking is: power between 26 and 30A (p=26-30) and frequency between 60 and 100 kHz (f=60-100). The white rectangle represents the processing window for marking.

### Examples 1 - 8

Titan-grey colored (color nr. 24105) polycarbonate (PC) samples were prepared similar to comparative experiment A with the exception that an additional amount of different additives was added to the compounds. The compositions of the compounds are given in the table below. Similar to comparative experiment A, evaluation matrices were marked on the samples. A scan of the marked samples is also shown in Figure 2, in which the white rectangle represents the processing window for marking. The processing window for marking is also given in the table below.

### Compound composition

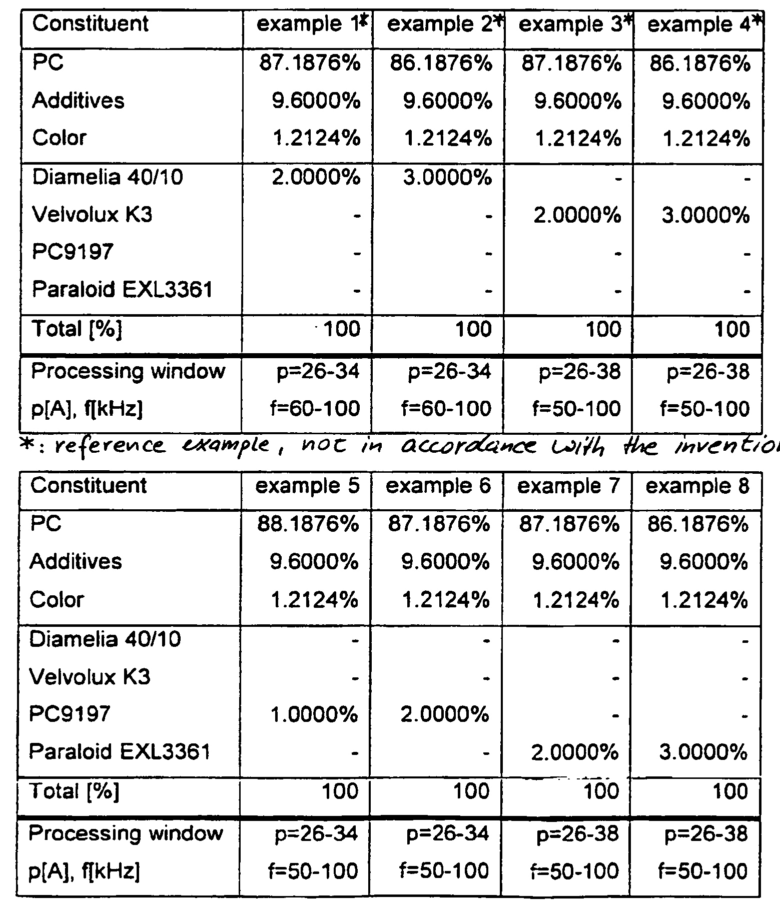

It is shown that upon addition of the additives, the processing window for marking increases.

### Comparative experiment B

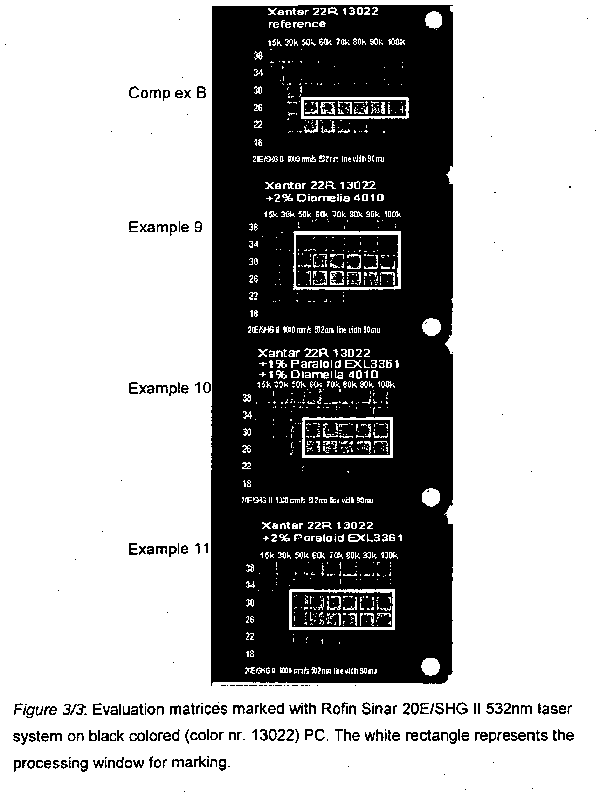

A black colored (color nr. 13022) polycarbonate compound was prepared similar to comparative experiment A. The composition of the compound is given in the table below. Similar to comparative experiment A, evaluation matrices were marked on the samples. A scan of the marked samples is shown in Figure 3, in which the white rectangle represents the processing window for marking. The processing window for marking is also given in the table below.

### Additives:

0.05% phosphite heat-stabiliser (Lankromark LE131)
0.30% mould release agent (pentaerythritol tetra stearate, PETS, Loxiol EP861)

### Color formulation (for obtaining color nr. 13022), L*=31:

0.105% Pigment black 7 (Black Pearls 800)
0.065% Solvent yellow 163 (Oracet Yellow GHS from Ciba-Geigy)
0.284% TiO2 white, Pigment white 6 (Kronos 2233)
0.0126% Solvent red 135 (Macrolex Red EG)

### Compound composition

| Constituent | reference |
|---|---|
| PC | 99.1834% |
| Additives | 0.3500% |
| Color | 0.4666% |
| Diamelia 40/10 | - |
| Paraloid EXL3361 | - |
| Total [%] | 100 |
| Processing window | p=26 |
| p[A], f[kHz] | f=50-100 |

### Examples 9-11

Black colored (color nr. 13022) samples were prepared similar to comparative experiment B. However, an additional amount of different additives was added to the compounds. The compositions of the compounds are given in the table below. Similar to comparative experiment A, evaluation matrices were marked on the samples. A scan of the marked samples is also shown in Figure 3. The processing window for marking is given in the table below.

### Compound composition

| Constituent | example 9* | example 10 | example 11 |
|---|---|---|---|
| PC | 97.1834% | 97.1834% | 97.1834% |
| Additives | 0.3500% | 0.3500% | 0.3500% |
| Color | 0.4666% | 0.4666% | 0.4666% |
| Diamelia 40/10 | 2.0000% | 1.0000% | - |
| Paraloid EXL3361 | - | 1.0000% | 2.0000% |
| Total [%] | 100 | 100 | 100 |
| Processing window | p=26-34 | p=26-30 | p=26-30 |
| p[A], f[kHz] | f=50-100 | f=80-100 | f=50-100 |

| | | | |
|---|---|---|---|
| *: reference example, not in accordance with the invention | | | |

It is shown that upon addition of the (combination of) additives, the processing window for marking increases.

## Claims

1. Polymer composition comprising a thermoplastic polymer and at least one colorant, wherein the composition further comprises from 0.1 to 15 wt.%, relative to the total weight of the composition, of a laser marking additive being or comprising a polymer of an acrylate monomer and optionally a metal sulfate whereby the metal is Na, K, Mg, Ca, Ba, Zr, Zn, Al and/or Si.

2. Polymer composition according to claim 1, wherein the composition comprises at least 0.5 wt.%, relative to the total weight of the composition, of the laser marking additive(s).

3. Polymer composition according to claim 1, wherein the composition comprises at least 1 wt.%, relative to the total weight of the composition, of the laser marking additive(s).

4. Polymer composition according to anyone of claims 1-3, wherein the composition comprises at most 5 wt.%, relative to the total weight of the composition, of the laser marking additive(s).

5. Polymer composition according to anyone of claims 1-4, wherein the composition comprises barium sulphate as laser marking additive.

6. Polymer composition according to anyone of claims 1-5, wherein the composition comprises polymethyl methacrylate as laser marking additive or wherein the composition comprises a laser marking additive comprising polymethyl methacrylate.

7. Polymer composition according to anyone of claims 1-6, wherein the composition has a color with a lightness L<*> value lower than 50.

8. Polymer composition according to anyone of claims 1-7, wherein the composition comprises carbon black as colorant.

9. Polymer composition according to anyone of claims 1-8, wherein the amount of the colorant(s) is from 0.01 to 20 wt.% (relative to the total weight of the composition).

10. Polymer composition according to anyone of claims 1-9, wherein the composition comprises from 0.01 to 5 wt.% carbon black.

11. Polymer composition according to anyone of claims 1-10, wherein the thermoplastic polymer is polystyrene, polycarbonate, styrene acrylonitrile copolymer, polyethylene terephtalate, polybutylene terephtalate and/or ABS.

12. Polymer composition according to anyone of claims 1-11, wherein the thermoplastic polymer is polycarbonate.

13. Polymer composition according to anyone of claims 1-12, wherein the composition further comprises up to 50% by weight of reinforcing materials, up to 60% by weight of elastomeric modifier, up to 20% by weight of flame- retardant additives, and/or up to 2% by weight of processing additives.

14. Article, wholly or partly made of the composition according to anyone of claims 1-13.

15. Process for applying a light laser marking onto a dark background, in which an article consisting -at least at the place where the marking is applied- of a composition according to anyone of claims 1-13, is irradiated with laser light.

16. Process according to claim 15, wherein the article is irradiated with laser light with a wavelength of 532 nm or with a wavelength of 1064 nm.

17. Use of a polymer of an acrylate monomer and optionally of a metal sulfate, whereby the metal is Na, K, Mg, Ca, Ba, Zr, Zn, Al and/or Si, as a laser marking additive for applying a light laser marking onto an article having, at least at the place where the marking is applied, a dark background.

## Patentansprüche

1. Polymerzusammensetzung, die ein thermoplastisches Polymer und mindestens einen Farbstoff umfasst, wobei die Zusammensetzung weiterhin 0,1 bis 15 Gew.%, bezogen auf das Gesamtgewicht der Zusammensetzung, eines Lasermarkierungsadditivs, welches ein Polymer eines Acrylatmonomers ist oder umfasst, und optional ein Metallsulfat, worin das Metall Na, K, Mg, Ca, Ba, Zr, Zn, Al und/oder Si ist, umfasst.

2. Polymerzusammensetzung gemäß Anspruch 1, wobei die Zusammensetzung mindestens 0,5 Gew.%, bezogen auf das Gesamtgewicht der Zusammensetzung, Lasermarkierungsadditiv(e) umfasst.

3. Polymerzusammensetzung gemäß Anspruch 1, worin die Zusammensetzung mindestens 1 Gew.%, bezogen auf das Gesamtgewicht der Zusammensetzung, Lasermarkierungsadditiv(e) umfasst.

4. Polymerzusammensetzung gemäß einem der Ansprüche 1 bis 3, wobei die Zusammensetzung höchstens 5 Gew.%, bezogen auf das Gesamtgewicht der Zusammensetzung, Lasermarkierungsadditiv(e) umfasst.

5. Polymerzusammensetzung gemäß einem der Ansprüche 1 bis 4, wobei die Zusammensetzung Bariumsulfat als Lasermarkierungsadditiv umfasst.

6. Polymerzusammensetzung gemäß einem der Ansprüche 1 bis 5, wobei die Zusammensetzung Polymethylmethacrylat als Lasermarkierungsadditiv umfasst oder wobei die Zusammensetzung ein Lasermarkierungsadditiv umfasst, das Polymethylmethacrylat umfasst.

7. Polymerzusammensetzung gemäß einem der Ansprüche 1 bis 6, wobei die Zusammensetzung eine Farbe mit einem Helligkeitswert L<*> von weniger als 50 hat.

8. Polymerzusammensetzung gemäß einem der Ansprüche 1 bis 7, wobei die Zusammensetzung Ruß als Farbstoff umfasst.

9. Polymerzusammensetzung gemäß einem der Ansprüche 1 bis 8, wobei die Menge des/der Farbstoff(s/e) 0,01 bis 20 Gew.% (bezogen auf das Gesamtgewicht der Zusammensetzung) beträgt.

10. Polymerzusammensetzung gemäß einem der Ansprüche 1 bis 9, wobei die Zusammensetzung 0,01 bis 5 Gew.% Ruß umfasst.

11. Polymerzusammensetzung gemäß einem der Ansprüche 1 bis 10, wobei das thermoplastische Polymer Polystyrol, Polycarbonat, Styrolacrylnitril-Copolymer, Polyethylenterephthalat, Polybutylenterephthalat und/oder ABS ist.

12. Polymerzusammensetzung gemäß einem der Ansprüche 1 bis 11, wobei das thermoplastische Polymer Polycarbonat ist.

13. Polymerzusammensetzung gemäß einem der Ansprüche 1 bis 12, wobei die Zusammensetzung weiterhin bis zu 50 Gew.% Verstärkungsmaterialien, bis zu 60 Gew.% eines Elastomerreglers, bis zu 20 Gew.% Flammschutzmittelzusätze und/oder bis zu 2 Gew.% Verarbeitungshilfsstoffe umfasst.

14. Artikel, der ganz oder teilweise aus der Zusammensetzung gemäß einem der Ansprüche 1 bis 13 hergestellt ist.

15. Verfahren zum Aufbringen einer hellen Lasermarkierung auf einem dunklen Untergrund, in welchem ein Artikel, der zumindest an der Stelle, an der die Markierung aufgebracht ist, aus einer Zusammensetzung gemäß einem der Ansprüche 1 bis 13 besteht, mit Laserlicht bestrahlt wird.

16. Verfahren gemäß Anspruch 15, worin der Artikel mit Laserlicht mit einer Wellenlänge von 532 nm oder einer Wellenlänge von 1.064 nm bestrahlt wird.

17. Verwendung eines Acrylatmonomer-Polymers und optional eines Metallsulfats, worin das Metall Na, K, Mg, Ca, Ba, Zr, Zn, Al und/oder Si ist, als Lasermarkierungsadditiv zum Aufbringen einer hellen Lasermarkierung auf einem Artikel, der zumindest an der Stelle, an der die Markierung aufgebracht wird, einen dunklen Hintergrund hat.

## Revendications

1. Composition de polymère comprenant un polymère thermoplastique et au moins un colorant, la composition comprenant en outre de 0,1 à 15 % en masse, par rapport à la masse totale de la composition, d'un additif de marquage au laser étant ou comprenant un polymère d'un monomère acrylate et éventuellement un sulfate métallique, le métal étant Na, K, Mg, Ca, Ba, Zr, Zn, Al et/ou Si.

2. Composition de polymère selon la revendication 1, où la composition comprend au moins 0,5 % en masse, par rapport à la masse totale de la composition, du ou des additifs de marquage au laser.

3. Composition de polymère selon la revendication 1, où la composition comprend au moins 1 % en masse, par rapport à la masse totale de la composition, du ou des additifs de marquage au laser.

4. Composition de polymère selon l'une quelconque des revendications 1-3, où la composition comprend au plus 5 % en masse, par rapport à la masse totale de la composition, du ou des additifs de marquage au laser.

5. Composition de polymère selon l'une quelconque des revendications 1-4, où la composition comprend du sulfate de baryum comme additif de marquage au laser.

6. Composition de polymère selon l'une quelconque des revendications 1-5, où la composition comprend du poly(méthacrylate de méthyle) comme additif de marquage au laser, ou la composition comprend un additif de marquage au laser comprenant du poly(méthacrylate de méthyle).

7. Composition de polymère selon l'une quelconque des revendications 1-6, où la composition a une couleur ayant un indice de luminosité L* inférieur à 50.

8. Composition de polymère selon l'une quelconque des revendications 1-7, où la composition comprend du noir de carbone comme colorant.

9. Composition de polymère selon l'une quelconque des revendications 1-8, où la quantité de colorant(s) est de 0,01 à 20 % en masse (par rapport à la masse totale de la composition).

10. Composition de polymère selon l'une quelconque des revendications 1-9, où la composition comprend de 0,01 à 5 % en masse de noir de carbone.

11. Composition de polymère selon l'une quelconque des revendications 1-10, où le polymère thermoplastique est un polystyrène, un polycarbonate, un copolymère de styrène et d'acrylonitrile, un poly(téréphtalate d'éthylène), un poly(téréphtalate de butylène) et/ou un ABS.

12. Composition de polymère selon l'une quelconque des revendications 1-11, où le polymère thermoplastique est un polycarbonate.

13. Composition de polymère selon l'une quelconque des revendications 1-12, où la composition comprend en outre jusqu'à 50 % en masse de matières renforçantes, jusqu'à 60 % en masse de modificateur élastomère, jusqu'à 20 % en masse d'agents ignifuges et/ou jusqu'à 2 % en masse d'additifs de traitement.

14. Article entièrement ou partiellement constitué de la composition selon l'une quelconque des revendications 1-13.

15. Procédé d'application d'un marquage au laser clair sur un fond foncé, dans lequel on expose un article constitué - au moins à l'endroit où est appliqué le marquage - d'une composition selon l'une quelconque des revendications 1-13 à de la lumière laser.

16. Procédé selon la revendication 15, dans lequel on expose l'article à de la lumière laser ayant une longueur d'onde de 532 nm ou une longueur d'onde de 1064 nm.

17. Utilisation d'un polymère d'un monomère acrylate et éventuellement d'un sulfate métallique, le métal étant Na, K, Mg, Ca, Ba, Zr, Zn, Al et/ou Si, comme additif de marquage au laser pour l'application d'un marquage au laser clair sur un article ayant, au moins à l'endroit où est appliqué le marquage, un fond foncé.
